# EUROPEAN PATENT SPECIFICATION

(11) **EP 3 236 763 B1**
(45) Date of publication and mention of the grant of the patent: **30.10.2019**
(21) Application number: 15820541.9
(22) Date of filing: 28.12.2015
(51) Int. Cl.: A23C 9/154, A23C 9/15, A23C 21/06, A23L 29/212, A23C 21/10, A23L 29/281, A23L 33/19, A23C 21/08, A23C 11/08, A23L 29/10, A23L 35/00, A23L 9/10

(54) **PROCESS FOR MAKING A VISCOUS COMPOSITION COMPRISING WHEY PROTEIN**
VERFAHREN ZUR HERSTELLUNG EINER VISKOSEN ZUSAMMENSETZUNG MIT MOLKEPROTEIN
PROCÉDÉ DE FABRICATION D'UNE COMPOSITION VISQUEUSE COMPRENANT UNE PROTÉINE DE LACTOSÉRUM

(30) Priority: 26.12.2014 WO PCT/IB2014/003124; 26.12.2014 WO PCT/IB2014/003125; 26.12.2014 WO PCT/IB2014/003126
(43) Date of publication of application: 01.11.2017
(73) Proprietor: Compagnie Gervais Danone, 75009 Paris (FR)
(72) Inventor: VALENTINI, Céline, 92320 Châtillon (FR); PHILIPPE, Jean-Marc, 91310 Leuville sur Orge (FR)
(74) Representative: Regimbeau
(86) International application number: PCT/EP2015/081311
(87) International publication number: WO 2016/102714

(56) References cited:
- EP-A1- 2 409 575
- WO-A1-01/01789
- WO-A1-97/37548
- WO-A1-2007/073188
- US-A1- 2014 296 162
- Heni B. Wijayanti ET AL: "Stability of Whey Proteins during Thermal Processing: A Review : Thermal stability of whey proteins...", COMPREHENSIVE REVIEWS IN FOOD SCIENCE AND FOOD SAFETY, vol. 13, no. 6, 20 October 2014 (2014-10-20), pages 1235-1251, XP055552109, US ISSN: 1541-4337, DOI: 10.1111/1541-4337.12105

## Description

The invention relates to a process for making a composition comprising a high amount of whey protein. The process involves preparing a mass having a high amount of whey protein, and then mixing with an aqueous preparation. The composition obtained presents a modified, controlled texture.

Whey proteins in aqueous media are known to gel upon heat treatments. The formation of the gel can foul the processing equipments. The higher the whey protein concentration is, the more difficult the processing is. Various documents describe compositions and processes to obtain liquid drinkable products having high amounts of whey proteins. There is however a need for different textures, for example with viscous and/or gel textures, that are appreciated by consumers. There is thus a need in compositions and/or processes allowing appropriate process ability in equipment while providing a viscous and/or gel texture, preferably with an improved texture stability over time.

Document WO 2009/011573 describes beverages having a pH of 6.6-8.2, comprising 5-12% of whey protein and 4-16% of specific sugars. The document teaches that these formulations allow avoiding the formation of gels upon heating, and thus to have a liquid beverage. There is a need for products having a different texture and for processes for making the same. Document WO 97/37548 discloses a process for influencing the gel structure of whey protein by including a polysaccharide hydrocolloid such as carrageenan.

The invention addresses at least one of the problems or needs above with a process for making a viscous composition comprising at least 8.0% by weight of whey protein, comprising the following steps of:
Step 1) preparing a Mass 1 composition comprising at least 8.8% by weight of whey protein and heat-treating at a temperature of higher than 85°C, and
Step 2) adding at least one aqueous preparation comprising at least one polysaccharide, comprising a native starch,
wherein the ratio by weight between Mass 1 and the aqueous preparation is of at least 50/50, preferably between 60/40 to 90/10.

It has been surprisingly found that the process of the invention allows the compositions to undergo different texture evolutions. It has thus been found that the process can provide a more appropriate, different, texture that can be appreciated by consumer. Moreover the texture is better controlled over time, for example during a shelf life, being for example more stable.

The invention also relates to products comprising a container and the composition of the invention, in the container.

### Definitions

In the present application a shelf life refers to a storage period, at shelf temperature such as at ambient or at chilled temperature, of at least 7 days, preferably at least 14 days, preferably at least 30 days, after a final preparation step. The shelf life can be of up to 40 or 50 days for products to be stored at chilled temperature. The shelf life can be of several months, for example up to 3 or 6 months or even more for products to be stored at ambient temperature.

In the present application a chilled temperature refers to a temperature of from 2°C to 10°C, preferably from 4°C to 10°C, for example to a temperature of a refrigerator.

In the present application a room temperature or ambient temperature refers to a temperature of from 15°C to 35°C, preferably from 20°C to 25°C. A room temperature is typically used herein for a temperature at a production facility. An ambient temperature is typically used herein for a temperature after production, for example on shelves.

In the present specification, unless otherwise provided, the viscosity refers to the viscosity as measured, preferably after 10 s at a shear rate, preferably with a rheometer with 2 co-axial cylinders, for example with a Mettler® RM 180 or 200, at an indicated temperature and shear. The temperature is typically 10°C or 30°C. The shear rate is typically 64 s⁻¹ or 1290 s⁻¹. If the temperature is not mentioned the temperature is to be 10°C. If the shear is not mentioned the shear is to be 64 s⁻¹.

In the present application the gel strength refers to the force (in grams) measured by a penetrometry texture analyser, for example, with a TA.XT2 texture analyzer, with the following settings:
- mobile: a cylinder Probe 10, 1.3 cm diameter and 35 mm height
- temperature: 10°C
- calibration for mobile: 5 kg
- mobile speed: 0.2 mm/s
- penetration distance: 15 mm
- sensibility of detection: 0.5 g.

In the present specification a "viscous" composition refers to a composition that is not liquid or pourable. Preferably a viscous composition meets the following criteria: after 1 minute, at a room temperature, preferably at 20°C, a maximum of 10% by weight of the composition would flow out of a container with an opening, upon positioning the container vertically, such that the opening is at the lowest altitude. Viscous compositions encompass compositions with a gel texture. Preferably, a viscous composition has a viscosity of from 500 mPa.s to 50000 mPa.s, preferably from 1000 mPa.s to 10000 mPa.s, preferably from 1500 mPa.s to 5000 mPa.s, at 10°C at 64 s⁻¹ or 10°C at 1290 s⁻¹. Preferably a viscous composition has strength of at least 30 g, preferably at least 500 g, preferably at least 1000 g.

In the present invention, unless otherwise specified, the percentages are percentages by weight.

### Product and Composition

The composition prepared by the process according to the invention is a food composition. The composition is typically to be provided in a product comprising a container and the composition. The product is a food product comprising the composition to be administered orally, and a container wherein the composition is contained. In other words the container is the packaging of the composition. The product is typically a sealed product: the container comprising the product is typically sealed before a first use. Upon a first use, the consumer typically provides an opening to the container with altering the container, for example by tearing or cutting a flexible part or by breaking a temper evidence on the cap.

The volume of composition can typically correspond to 70-100%, preferably 80-100%, of the maximum volume of the container.

The product can be stored at a chilled temperature or at an ambient temperature.

### Container

The container can be any food container, such as a cup, a bottle or a flexible container. The container is the packaging of the composition.

Preferably the container is a flexible container. By flexible container it is meant that the container comprises at least a part that is made of a flexible material, such as a monolayer or multilayer laminate, that can be substantially deformed by manipulating. The laminate can have for example a thickness of less than 0.5 mm, preferably less than 0.3 mm, for example less than 0.1 mm. The laminate typically exhibits barrier properties suitable for packaging food compositions. Examples of materials that can be used in the laminate include papers, metal foils or coatings, and plastic film or coatings.

The packaging can be for example a pouch. Flexible pouches are known by the one skilled in the art of packaging. They typically include a plied or folded part and a sealed part, typically a thermosealed part. Typically a laminate is handled and partially sealed to provide a filling opening, then the composition is filled via the filling opening, and then the pouch is closed by further sealing and/or by providing a pre-formed closure, such as a cap.

In a preferred embodiment the container is a pouch container known as doypack. In a preferred embodiment the container has an opening, preferably having a size of from 1 mm to 15 mm, preferably from 5 mm to 15 mm, preferably closed by a non-flexible cap. It is meant that the container is such that at least after a first use opening, the container is provided with the opening, said opening allowing the composition to be dispensed out of the container. The opening is preferably closed, for example with a tearable or cuttable portion or with a cap. In one embodiment, for example with caps, the opening can be closed again after first use. In one embodiment the opening cannot be closed again, without further means, after first use.

The container can be for example a container having a maximum volume of 50 ml (or 50 g) to 500 ml (or 500 g), for example from 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g),or 250 ml (or 250 g) to 300 ml (or 300 g), or 300 ml (or 300 g) to 500 ml (or 500 g).

The composition in the container has preferably a gel strength of from 1000 g to 8000 g, preferably from 1000 g to 5000 g, for example from 1000 g to 2800 g. Such a texture allows the composition to be well dispensed from the container via the opening or via a spoon, while being appreciated in mouth.

The product can be prepared by a process comprising the following steps:
Step A) preparing the composition, and
Step B) filling the composition in a container.

Step A) is the process of the invention and involves step 1) and step 2) mentioned above.

### Composition

The composition comprises at least 8.0% by weight of whey protein. The composition preferably has a pH of from 4.2 to 10.0, preferably from 5.5 to 9.0.

The composition has preferably a gel strength of from 1000 g to 8000 g, preferably from 1000 g to 5000 g, for example from 1000 g to 2800 g. Such a texture allows the composition to be well dispensed from the container via the opening, while being appreciated in mouth.

The composition preferably has an energy density of less than 200 kcal per 100 g. It is believed that compositions having an energy density higher than 200 kcal per 100g would not be adapted to regular consumption by consumers that do not present food-related pathologies or other specific needs. Moreover such compositions would be loaded with carbohydrates and/or fats that can modify the rheology. The energy density is preferably lower than 150 kcal per 100 g, preferably lower than 120 kcal per 100 g, preferably lower than 110 kcal per 100 g. Fat preferably represent at most 25% of the energy, preferably at most 20%, for example from 5% to 20%. Carbohydrates preferably represent at most 65% of the energy, preferably at most 60%, for example from 40% to 60%. Protein preferably represents at least 20% of the energy, preferably at least 30%, for example from 30% to 50%.

The composition is typically an aqueous composition, comprising water and ingredients. It is mentioned that a part of the water can come from ingredients used to prepare the composition. The composition can for example have a dry matter content of up to 60% by weight, preferably from 8% to 50% by weight. The composition can have a water content of from 92% to 50% by weight. The water can typically be the matrix or carrier of the composition, wherein the ingredients are introduced. Other matrix or carriers, can for example include milk-based liquids or fruit juices, either obtained directly from milk or fruits, or reconstituted by mixing powder(s) or concentrate(s) therefrom with water. In one embodiment the matrix or carrier is different from a milk-based liquid or from a fruit juice. In one embodiment the composition is different from a milk-based composition or from a fruit juice based composition. The water has preferably a low amount of minerals. The water is preferably demineralized water or osmosed water.

The composition has preferably a pH of from 6.0 to 8.0, for example from 6.0 to 6.5, or from 6.5 to 7.0, or from 7.0 to 7.5, or from 7.5 to 8.0. It is believed that in this range the whey protein is typically in a form different from a colloidal suspension, which allows gelling, typically at the high concentrations of the invention, typically after some heat treatment.

The composition can comprise at least 8.50% by weight, preferably at least 9.50%, preferably at least 10.0%, of whey protein. Preferably the composition is an aqueous composition comprising from 10.0% to 17.5% by weight of whey protein, for example from 10.5% to 17.5%. The whey protein is typically provided in the composition from a whey protein source or ingredient.

Whey proteins are known by the one skilled in the art, and are commercially available. Whey is typically manufactured by coagulating milk, and is typically obtained as a by-product of cheese or fermented milk production. Whey can be sweet whey or acid whey, from which the whey protein are concentrated. The concentration of protein in whey is typically increased by removing lipids and other non-protein materials. For example spray drying after membrane filtration separates the proteins from whey. Whey protein is the collection of globular proteins isolated from whey. Whey proteins are typically comprised of a mixture of α-lactalbumin, β-lactoglobulin, and optionally serum albumin. The amounts of these compounds in the whey protein can vary. Typical proportions are for example the following: 60-70 wt% α-lactalbumin, 20-30 wt% β-lactoglobulin, 0-10 wt% serum albumin.
It is mentioned that the whey proteins of the invention are typically non-hydrolyzed whey proteins. Whey proteins that can be used in the invention include Whey Protein Concentrates (WPC) and, preferably Whey Protein Isolates (WPI).

In certain embodiments the protein present in the whey protein source, for example a whey protein concentrate (WPC), a whey protein isolate (WPI), or a blend of whey protein sources including a blend of WPCs or WPIs or both, comprises, consists essentially of, or consists of non-hydrolysed whey protein. In one embodiment, the protein present in the WPC or WPI comprises at least 65% non-hydrolysed protein, at least 70% non-hydrolysed protein, at least 75% non-hydrolysed protein, at least 80% non-hydrolysed protein, at least 85% non-hydrolysed protein, at least 90% non-hydrolysed protein, at least 95% non-hydrolysed protein, or at least 99% non-hydrolysed protein. In one embodiment, the WPC or WPI is substantially free of hydrolysed protein.

In one embodiment, the whey protein is provided by an ingredient that comprises a protein content of 35% to 95% by weight of the dry matter of the ingredient.

A whey protein concentrate (WPC) is a fraction of whey from which lactose has been at least partially removed to increase the protein content to at least 20 wt%. Preferably the WPC has at least 40 wt%, more preferably at least 55 wt%, even more preferably at least 65 wt% and most preferably at least 75 wt% of the total solids as whey protein. Preferably, the relative proportions of the various whey proteins are substantially equivalent to those of the whey from which the WPC is obtained. Preferably, the WPC is an evaporated whey protein retentate. WPCs are generally prepared by ultrafiltration and/or diafiltration of whey. In one embodiment the whey protein ingredient is an utrafiltrated WPC. A whey protein isolate (WPI) is a WPC having at least 90% of the total solids as whey protein. Preferably, the protein composition in the ingredient is substantially that of the whey from which it is obtained.

The whey protein ingredient, preferably WPI, might comprise an amount of minerals, including for example sodium and/or calcium and other minerals. Preferably the amount of minerals in the whey protein is of less than 3250 mg per 100 g, preferably less than 2000 mg per 100g. Preferably the amount of calcium in the whey protein is of less than 300 mg per 100 g, preferably less than 200 mg per 100g, preferably less than 100 mg per 100 g. Preferably the amount of sodium in the whey protein is of less than 500 mg per 100 g, preferably less than 300 mg per 100 g, preferably less than 200 mg per 100 g. Preferably the amount of minerals in the whey protein is of less than 3250 mg per 100 g, and the amount of calcium in the whey protein is of less than 300 mg per 100 g, and the amount of sodium in the whey protein is of less than 500 mg per 100 g. For example the amount of minerals in the whey protein can be of less than 2000 mg per 100 g, and the amount of calcium in the whey protein can be of less than 200 mg per 100 g, and the amount of sodium in the whey protein can be of less than 300 mg per 100 g.

Whey proteins in a native state are in a globular form. Upon processing, for example upon heating, whey proteins can be denaturated, being thus at least partially in a form that does not correspond to the globular native form, for example in a non-globular unfold form. This phenomenon is known by the one skilled in the art. The whey protein ingredient is typically an ingredient wherein the whey protein is not or is slightly in a denaturated state. Preferably at most 45% of the whey protein in the ingredient is in a denaturated state, preferably at most 35%. In one embodiment 5-30% of the whey protein in the ingredient is in a denaturated state. It is mentioned that, in the composition after having undergone a preparation process, some of the whey protein can be in a denaturated state, preferably with from more than 45% to 90% being in denaturated state, for example from 60% to 80%.

It is mentioned that the whey proteins, along the preparation process of the composition, from the whey protein source or ingredient to the intermediate preparations and to the final composition, typically do not undergo a drying step and/or a concentration step. In this aspect, the preparation, the composition, and the process to make the same are typically different from compositions of whey protein ingredients to be added in a formulation and processes to make whey protein ingredients to be added in a formulation.

The composition can comprise some other proteins different from whey proteins, for example casein compounds such as non-micellar casein compounds, for example caseinates, or vegetal proteins such as soy protein or pea protein. Preferably the weight ratio between whey proteins and other proteins is of higher than 78/22, preferably higher than 80/20, preferably higher than 90/10.

It is mentioned that the composition typically comprises a leucine component, as part of the whey protein. The composition can comprise some added free leucine, preferably L-leucine, added to further increase the leucine content. The total leucine can be thus adjusted, if needed, to be for example of 1% to 2% by weight of the composition, of which from 10% to 50% by weight or number is preferably free-leucine.

The composition preferably comprises sugar. Sugar helps in providing organoleptic properties appreciated by consumers. Additional sugar can help in the process of making the composition, by preventing or postponing fouling or gelling in the equipment. The composition can for example comprise from 2.5% to 15.0% by weight of sugar, preferably from 5.0% to 10.0%.

The composition comprises at least one polysaccharide. The polysaccharide helps in controlling gelling of the composition, for example in preventing or postponing gelling or fouling in the equipment, and/or by moderating the gel strength of the composition. The polysaccharide can participate in protecting the whey protein, and/or in hindering aggregation. The polysaccharide can participate in complexing and/or chelating divalent cations, such as calcium, that would participate in gelling otherwise. The amount of polysaccharide can be for example of from 0.1% to 5.0% by weight, preferably from 0.5% to 2.0%. Examples of polysaccharides that can be present in the composition include starches, galactomannans, such as guar gums and locust bean gums, carrageenans, xanthane gum, maltodextrines or pectins.

The polysaccharide comprises a native starch, also referred to as an unmodified starch, for example a native maize starch or waxy maize starch, for example with an amylose content of from 1% to 50%, preferably from 20% to 30%. Appropriate ingredients include starches referred to as waxy maize starch and/or native starch and/or mixtures thereof, in particular referred to as waxy maize starch and/or native maize starch and/or mixtures thereof. In a particular embodiment the native starch is a non-pregelatinized native starch. Non-pregelatinized starch refers to a starch that has not undergone modifications to render it soluble in cold water, such as swelling and/or dissolution. Non pre-gelatinized native starches typically have macromolecular amylopectin and optionally amylose in a similar arrangement that in native state, without significant rearrangement for example of the microcrystalline structure and/or inclusion of water molecules. It is mentioned that non-pregelatinized starches exclude gelatinized starches. The non-pregelatinized native starch can be a native maize starch or waxy maize starch, for example with an amylose content of from 0% to 50%, preferably from 0% to 30%, for example from 0% to 5% or from 5% to 10%, or from 10% to 15%, or from 15% to 20%, or from 20% to 25% or from 25% to 30%. These contents are typically by weight. An appropriate non-pregelatinized native starch ingredient is for example Amioca powder TF, marketed by Ingredion®. The polysaccharide might comprise other starches such as modified starches, for example chemically and/or physically modified starches, for example modified with cross-linkages. Such other starches include for example pre-gelatinized starches.

In one embodiment the composition comprises at least one native starch, preferably a non-pregelatinized native starch, and at least one further polysaccharide. The further polysaccharide can have suspending and/or viscosity enhancing and/or stability enhancing properties. Such further polysaccharides for example include other starches such as modified starches, for example tapioca chemically modified starches, such as National Frigex™ NSC marketed by Ingredion®. Other further polysaccharides include for example galactomannans, such as guar gums and locust bean gums, carrageenans, xanthane gum, maltodextrines or pectins.

The composition preferably comprises some fat, preferably in a low amount. If present the amount of fat can be of at least 0.1% by weight, preferably at least 0.5%.The composition can comprise for example from 0.1% to 5.0% by weight of fat, preferably from 0.5% to 2.5%. The fat or a part thereof can be an oil, preferably a vegetal or animal oil such as fish oil. The oil can be present for example in an amount of from 0.1% to 5.0% by weight, preferably from 0.5% to 2.5%.

The composition can comprise some nutrients, different from the proteins, sugar and fat, preferably nutrients known as participating in a muscle-relating function. Examples include vitamins, such as vitamin C, vitamin B such as vitamin B6 and vitamin B9.

The composition can comprise organoleptic agents. Such agents are known for the one skilled in the art and are typically used to provide or adjust the taste or mouthfeel of the composition. The organoleptic modifiers can be for example:
- nuts pastes or extracts such as almond paste, hazelnuts compounds, chocolate, etc.
- cereals,
- fruits or fruits extracts,
- sweeteners different from sugar.

In one embodiment at least a part of the organoleptic modifiers are provided via an organoleptic preparation, often referred to as fruit preparation. Such preparations are known by the one skilled in the art, and are further detailed below.

The composition can comprise pH adjustment agents and/or buffers. For example the composition can comprise citric acid. The composition can comprise sequestrants such as sodium phosphate.

The composition preferably has an ionic strength of higher than 100 mM, preferably higher than 150 mM, preferably higher than 200 mM. Higher ionic strength are believed to help in providing viscous and/or gel textures.

The composition, preferably in a container, can be stored at a chilled temperature or at an ambient temperature.

### Process for making the composition

The process of the invention comprises the following steps:
Step 1) preparing a Mass 1 composition comprising at least 8.8% by weight of whey protein and heat-treating at a temperature of higher than 85°C, and
Step 2) adding at least one aqueous preparation comprising at least one polysaccharide, comprising a native starch,
wherein the ratio by weight between Mass 1 and the aqueous preparation is of at least 50/50, preferably between 60/40 to 90/10.

Step 1) involves a heat-treatment step at a temperature of higher than 85°C. Typically the heat-treatment step is performed before adding at least one aqueous preparation comprising at least one polysaccharide.

Mass 1 is a composition comprising the whey protein. At least one aqueous preparation is added to Mass 1 to form the composition. The at least one aqueous preparation is typically added to adjust the rheology and/or the taste. In the invention at least one added aqueous preparation that is added comprises at least one polysaccharide. The addition of such a polysaccharide, at such a later stage provides the modified texture and/or control thereof. The at least one aqueous preparation comprising the at least one polysaccharide can thus be also referred to as a texture control preparation.

Preferably the composition, more particularly Mass 1, during its preparation, in processing equipments, is in a liquid state. The viscosity can typically increase, up to gel state, after preparation, during a storage in an appropriate tank before filling, and/or during storage of the product for example at a chilled temperature or at ambient temperature. Thus the process can comprise a step of: Step C) storing the composition in the container to allow a gel formation. In one embodiment the process comprises a maturation step after step 2).

In one embodiment:
- the process involving step 1) and step 2) is carried out during from 1 minute to 5 hours, preferably from 30 minutes to 4 hours,
- an optional maturation period of up to 6 hours is then allowed.

The temperature during the maturation period can be of from 4°C to 45°C. In one embodiment the temperature decreases from a temperature at the end of step A), i.e. at the end of step 2), for example above 45°C, to a final temperature being room temperature, or a chilled temperature. In one embodiment the maturation period is performed at stable temperature, for example at a room temperature or at a chilled temperature. The maturation can be performed in a tank.

The process of making the composition typically involves a heat-treatment, such as pasteurization or sterilization to prevent any contamination. For neutral products having a pH of from 6.0 to 8.0 a sterilization is preferred. For neutral products to be stored at ambient temperature a sterilization is preferred. Given the high concentration of whey proteins, and the sensitivity to heat of these, that can result in a gel formation in the equipments and/or to fouling the equipments, it is preferred that the heat treatment be performed very quickly, typically with a Direct Steam Injection (DSI) technology. Thus, the preparation process involves a Direct Steam Injection step during step 1).

In one embodiment the at least one aqueous preparation comprises a Mass 2 composition comprising the at least one polysaccharide, and optionally a Mass 3 fruit preparation. Mass 2 can thus be referred to as a texture control preparation.

In one embodiment the at least one aqueous preparation comprises a Mass 2 composition comprising the at least one polysaccharide, and at least a Mass 3 fruit preparation.

In one embodiment Mass 1 comprises at least one polysaccharide, preferably identical to the at least one polysaccharide of the at least one aqueous preparation, typically of a Mass 2. In one embodiment Mass 3 comprises at least one polysaccharide, preferably identical to the at least one polysaccharide of Mass 2.

In one embodiment the at least one aqueous preparation comprising the at least one polysaccharide, preferably a Mass 2, comprises sugar. In one embodiment Mass 1 comprises sugar. In one embodiment, Mass 1 and the at least one aqueous preparation comprising the at least one polysaccharide, preferably a Mass 2, comprise sugar.

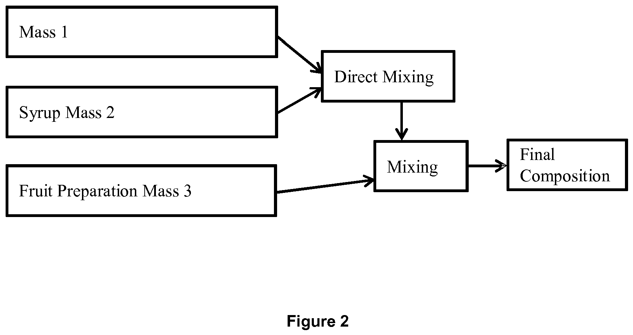

The addition to Mass 1 of the at least one aqueous preparation, typically a Mass 2 and/or a Mass 3, can be performed by any appropriate means. For example one can mix the Mass 1 and Mass 2, and then optionally mix a Mass 3. A procedure is for example represented on figure 2. Such mixing operations are known by the one skilled in the art.

The at least one aqueous preparation, preferably a Mass 2, comprises at least one polysaccharide, preferably in an amount of from 0.5% to 3.5% by weight. The polysaccharide comprises a native starch, also referred to as an unmodified starch, for example a native maize starch or waxy maize starch, for example with an amylose content of from 1% to 50%, preferably from 20% to 30%. Appropriate ingredients include starches referred to as waxy maize starch and/or native starch and/or mixtures thereof, in particular referred to as waxy maize starch and/or native maize starch and/or mixtures thereof. An appropriate ingredient is for example Amioca powder TF, marketed by Ingredion®. The polysaccharide might comprise other starches such as modified starches, for example chemically and/or physically modified starches, for example modified with cross-linkages. Such other starches include for example pre-gelatinized starches.

In one embodiment the at least one aqueous preparation, preferably a Mass 2, comprises at least one native starch, and at least one further polysaccharide. The further polysaccharide can have suspending and/or viscosity enhancing and/or stability enhancing properties. Such further polysaccharides for example include other starches such as modified starches, for example tapioca chemically modified starches, such as National Frigex™ NSC marketed by Ingredion®. Other further polysaccharides include for example galactomannans, such as guar gums and locust bean gums, carrageenans, xanthane gum, maltodextrines or pectins.

In a preferred embodiment, the polysaccharide of the at least one aqueous preparation, preferably a Mass 2, is a native starch.

Mass 1 comprises water and the whey proteins of the composition, preferably all the protein of the composition. Mass 1 is typically an aqueous composition. The water can typically be the matrix or carrier of Mass 1, wherein the ingredients are introduced. Other possible matrix or carriers are those described above for the composition. Examples include milk-based liquids, either obtained directly from milk, or reconstituted by mixing powder(s) or concentrate(s) with water. The water has preferably a low amount of mineral. The water is preferably demineralized water or osmosed water.

Mass 1 has a viscosity of less than 500 mPa.s at 1290 s⁻¹ at 30°C, preferably at 10°C, preferably less than 100 mPa.s at 1290 s⁻¹ at 30°C, preferably at 10°C.

The concentrations of ingredients in Mass 1 can be adjusted to fit with the concentrations provided above for the composition, depending on the dilution that can be provided by adding the at least one aqueous preparation, if added. As to adjustment of the concentrations, particularly the concentration in whey protein, the concentration can be for example increased by at least 10%. Thus is Mass 1, the concentration in whey protein is of at least 8.8%, preferably at least 9.35%, preferably at least 9.5%, preferably at least 10.0%, preferably at least 10.45%, preferably at least 11.0%.

Preferably Mass 1 is an aqueous composition comprising from 10.0% to 17.5% by weight of whey protein, or from 11.0% to 19.25% by weight of whey protein.
Mass 1 can comprise some of the sugar of the composition, typically in an amount such that the weight ratio between whey proteins and sugar is of from 0.5 to 1.0 or from 1.0 to 1.7, preferably 1.22 to 1.55. Mass 1 can comprise the leucine and/or at least a part of the organoleptic modifiers. Mass 1 can comprise some of the polysaccharide, typically in an amount of from 0.1% to 5.0% by weight, preferably from 0.5% to 2.0%, preferably in an amount of at least 10% more than the amounts mentioned above for the composition, if Mass 1 is further mixed with an aqueous preparation.

The pH of Mass 1 is preferably of from 4.2 to 10.0, preferably from 5.5 to 9.0, preferably from 6.0 to 8.0, for example from 6.0 to 6.5, or from 6.5 to 7.0, or from 7.0 to 7.5, or from 7.5 to 8.0. It is believed that in this range the whey protein is typically in a form different from a colloidal suspension, which allows gelling, typically at the high concentrations of the invention, typically after some heat treatment.

Mass 1 can be prepared for example by a process comprising the following steps:
Step a) Powdering,
Step b) Optionally Oil injection,
Step c) Homogenization,
Step d) Pre-Heating,
Step e) Direct Steam Injection (DSI),
Step f) Flash cooling,
Step g) Further cooling and optionally Storing.

It is mentioned that step a) and step g) can be batch steps, while steps b) to f) are typically continuous steps.

Step a) is a powdering step. In this step powder ingredient(s), typically the whey protein and optionally a polysaccharide, are introduced in a liquid matrix or carrier, such as those described above, typically water. Such a step and equipments therefore, for example triblenders, are quite conventional and known by the one skilled in the art. In a preferred embodiment the ingredients are handled and processed with avoiding introduction of gaz. The process can otherwise comprise a degasing step, preferably at some stage before the DSI step, preferably before the pre-heating step, preferably before the homogenization step. Step a) can be carried out at a room temperature.

It is mentioned that the mixture obtained at step a) can be subjected to a pre-heating step to a temperature of from higher than room temperature to about 75°C after step a).

If the composition comprises some oil, then the oil can be typically introduced by injection at a step b), for example by an in-line injection.

Step c) is a homogenization step. Such steps are known by the one skilled in the art. The homogenization can be for example performed in conventional homogenizers at a pressure of from 20 bars to 300 bars (20 to 300 10⁵ Pa), preferably from 50 bars to 250 bars (50 to 250 10⁵ Pa), for example at 50 bars (50 10⁵ Pa). It is preferred that the homogenization be performed before the DSI step. It has been found that subjecting Mass 1 to high shears, such as shear provided by homogenization can lead to increasing gelling of the proteins in the equipments and/or to accelerating fouling of the equipments.

Step d) is a pre-heating step, before the major heat treatment by DSI. It is mentioned that if a pre-heating step has been performed before oil injection and/or homogenization, then the pre-heating step d) is performed such that the temperature is further increased. It is preferred that the pre-heating be performed at a quite mild temperature, for example at a temperature of from 50°C to 75°C, preferably from 55°C to 70°C, preferably from 60°C to 65°C. Such mild temperatures are believed to provide enough temperature increase before the DSI, while preventing or postponing gelling of the proteins and fouling of the equipments at later stage, for example at DSI step or after.

Step e) is a Direct Steam Injection (DSI) step. Such steps and appropriate equipments are known. These allow subjecting compositions to high temperatures during a short period, and thus allow sterilizing products that are heat sensitive. Preferably the DSI is performed at a temperature of from 140°C to 150°C, preferably at a temperature of 145°C. Preferably the treatment time is of from 1s to 10s, preferably from 2s to 5s. The pressure can be for example of 1 bar (10⁵ Pa).

At step f) a flash cooling is performed, to decrease efficiently the temperature. Such a step is typically performed in a flash cooler, and involves introducing the composition in a vacuum chamber. The temperature after the flash cooling step is preferably of from 50°C to 65°C, preferably from 55°C to 63°C.

At step g) a further cooling is performed, to reach a desired storage and further processing temperature, for example of from 4°C to 45°C. In one embodiment the temperature decreases, for example from a temperature above 45°C, to a final temperature being a room temperature, or a chilled temperature. It is noted that step g) can be a maturation step in conditions as mentioned above.

After step g) the Mass 1 is typically a liquid, with a viscosity of less than 1000 mPa.s at 1290 s⁻¹ at 30°C, preferably at 10°C, preferably of less than 500 mPa.s at 1290 s⁻¹ at 30°C, preferably at 10°C, preferably of less than 100 mPa.s at 1290 s⁻¹ at 30°C, preferably at 10°C.

Mass 1 is then further processed to be mixed with the at least one aqueous preparation, preferably Mass 2. In one embodiment Mass 1 is temporary stored, before being mixed with the at least one aqueous preparation, preferably Mass 2. For example it can be transferred to a storage tank and stored, for example at a temperature of from 2°C to 35°C, for example at a room temperature or at a chilled temperature. The storage time is preferably of at most 24h, preferably at most 6h, for example up to 3 hours. Thus the process can comprise an intermediate storage time of Mass 1 of up to 6 hours, preferably up to 3 hours between step 1) and step 2).

Steps b) to f) that are typically continuous steps, especially step e), can run for a certain period of time. Upon running the equipments might progressively generate fouling that can reach a level at which stopping and cleaning would be required. The above-described process of making Mass 1 is found efficient, with allowing running periods of at least 30 minutes or even more, for example at least 1 minute, preferably at least 30 minutes, preferably at least 1 hour, preferably at least 3 hours, typically up to 6 hours, for example between 30 minutes and 4 hours.

The at least one aqueous preparation, preferably a Mass 2, comprises water and ingredients including the at least one polysaccharide and optionally sugar. The at least one aqueous preparation, preferably a Mass 2, can comprise some further ingredients such as organoleptic modifiers, or some nutrients. It is mentioned that a part of the water in the at least one aqueous preparation, preferably a Mass 2, can come from ingredients used to prepare the composition. The composition can for example have a dry matter content of from 0.5% by weight to 50% by weight, preferably from 1% to 20% by weight. Mass 2 can have a water content of from 0.5% to 99.5% by weight, preferably from 1% to 80% by weight. Mass 2 can have a water content of from 50% to 99.5% by weight, preferably from 80% to 99% by weight. The water can typically be the matrix or carrier of the at least one aqueous preparation, preferably a Mass 2, wherein the ingredients are introduced. Other possible matrix or carriers are those described above for the composition. Examples include milk-based liquids, either obtained directly from milk, or reconstituted by mixing powder(s) or concentrate(s) with water. In one embodiment the matrix or carrier is a milk-based liquid. In one embodiment the at least one aqueous preparation, preferably a Mass 2, is a milk-based composition. The water has preferably a low amount of mineral. The water is preferably demineralized water or osmosed water.

The at least one aqueous preparation, preferably a Mass 2, can comprise sugar, preferably in an amount of from 1% to 20% by weight, for example from 5% to 10% by weight.

The at least one aqueous preparation, preferably a Mass 2, can be prepared by any appropriate process. Preferred processes involve a heat treatment step to ensure pasteurization and/or sterilization.

If the composition comprises some nutrients, these are preferably added in the at least one aqueous preparation such as Mass 2 or Mass 3.

Mass 3 is typically a fruit preparation. These are intermediate preparations comprising fruit and/or cereals, typically used for imparting a fruit and/or cereal taste and/or mouthfeel to food products such as dairy products.

The fruit preparation typically comprises fruits. Herein fruits refer to any fruit form, including for example full fruits, pieces, purees, concentrates, juices etc.

Typically a fruit preparation can be added in an amount of 5-35% by weight with reference to the total amount of composition.

The fruit preparation typically comprises a stabilizing system, having at least one stabilizer. The stabilizing system can comprise at least two stabilizers. Such stabilizers are known by the one skilled in the art. They typically help in avoiding phase separation of solids, for examples of fruits or fruits extracts and/or in avoiding syneresis. They typically provide some viscosity to the composition, for example a viscosity (Bostwick viscosity at 20°C) of from 1 to 20 cm/min, preferably of from 4 to 12 cm/min.

The stabilizing system or the stabilizer can for example be a starch, a pectin, a guar, a xanthan, a carrageenan, a locust bean gum, or a mixture thereof. The amount of stabilizing system is typically of from 0.5 to 5% by weight.

The fruit preparation can typically comprise organoleptic modifiers. Such ingredients are known by the one skilled in the art.

The organoleptic modifiers can be for example sweetening agents different from sugar, coloring agents, cereals and/or cereal extracts.

Examples of sweetening agents are ingredients referred to as High Intensity Sweeteners, such as sucralose, acesulfamK, aspartam, saccharine, rebaudioside A or other steviosides or stevia extracts.

Examples of fruits include for example strawberry, peach, apricot, mango, apple, pear, raspberry, blueberry, blackberry, passion, cherry, and mixtures or associations thereof, such as peach-passion.

The fruits can be for example provided as:
- frozen fruit cubes, for example 10 mm fruit cubes, for example Individual Quick Frozen fruit cubes, for example strawberry, peach, apricot, mango, apple, pear fruit cubes or mixtures thereof,
- Aseptic fruit cubes, for example 10 mm fruit cubes, for example strawberry, peach, apricot, mango, apple or pear fruit cubes or mixtures thereof,
- fruit purees, for example fruit purees concentrated from 2 to 5 times, preferably 3 times, for example aseptic fruit purees, for example strawberry, peach, apricot, mango, raspberry, blueberry or apple fruit purees or mixtures thereof,
- single aseptic fruit purees, for example strawberry, raspberry, peach, apricot, blueberry or apple single aseptic fruit purees or mixture thereof,
- frozen whole fruits, for example Individual Quick Frozen whole fruits, for example blueberry, raspberry or blackberry frozen whole fruits, or mixtures thereof,
- mixtures thereof.

The ingredients and/or components of fruit preparation and the amounts thereof are typically such that the composition has a brix degree of from 1 to 65 brix, for example from 1 to 10 brix, or from 10 to 15 brix, or from 15 to 20 brix, or from 20 to 25 brix, or from 25 to 30 brix, or from 30 to 35 brix, or from 35 to 40 brix, or from 40 to 45 brix, or from 45 to 50 brix, or from 50 to 55 brix, or from 55 to 60 brix, or from 60 to 65 brix.

The fruit preparation can for example comprise fruit in an amount of from 30% to 80% by weight, for example from 50 to 70% by weight.

The fruit preparation can comprise water. It is mentioned that a part of the water can come from ingredients used to prepare the fruit preparation, for example from fruits or fruit extracts or from a phosphoric acid solution.

The fruit preparation can comprise pH modification agents such as citric acid. The fruit preparation can have a pH of from 2.5 to 5, preferably of from 2.8 to 4.2.

### Method of use

The composition of the invention or obtained by the process of the invention is typically to be orally ingested. It presents a texture and/or mouthfeel appreciated by consumer.

Upon use the composition is dispensed out of a container. To do so the user can use a spoon if the container is not a flexible container such as a cup, or, if the container is a flexible container, typically apply some pressure on the flexible part of the container to force the composition out of an opening. Thus the dispensing can be performed by applying a force on the container, preferably by pressing the container, preferably with a human hand. The opening can have for example a size (length, width or diameter for example) of from 1 mm to 15 mm. This dispensing is typically performed via an opening having a size of from 1 mm to 15 mm. In a preferred embodiment the dispensing is performed in the mouth of a human, for the composition to be orally ingested. It is however not excluded that the composition be dispensed in a cup or on a plate or on a spoon and then be ingested.

When dispensed out of the container, typically via the opening or via a spoon, the composition presents a texture and/or mouthfeel appreciated by consumer. It is mentioned that the dispensing through the opening might provide some shear and might slightly change the texture and/or mouthfeel of the composition. Such slightly modified texture and/or mouthfeel are appreciated by consumer.

Further details or advantages of the invention might appear in the following non limitative examples and on the following figures.

### Figures

Figure 1 represents a preparation process of Mass1.
Figure 2 represents a preparation process of the final composition according to the invention.

### Examples

Preparations of a Mass 1 composition and a Mass 2 aqueous preparation are described in example 1. Mass 2 is then added to Mass 1.

### Example 1 - Preparation of compositions

Mass 1 is a composition comprising a high amount of whey protein, further detailed below.

Mass 2 is syrup composition, further detailed below.

### Mass 1

Mass 1 has the composition shown on table 1 below.

**Table 1**

| **Ingredient** | **Wt % (as is)** |
|---|---|
| Fish oil: Omegavi 1812, Polaris® | 0.77% |
| WPI Lacprodan® 9224, Arla® | 13.20% |
| Sodium Caseinate: EM7, DMV® | 1.42% |
| L-Leucine | 0.48% |
| Native Starch: Amioca Powder TF, Ingredion® | 0.75% |
| Cristal sugar | 9.00% |
| Almond Past 95%, Fruisec® | 2.20% |
| Osmosed Water | 72.18% |
| Total | 100% |
| pH | 6.7 |

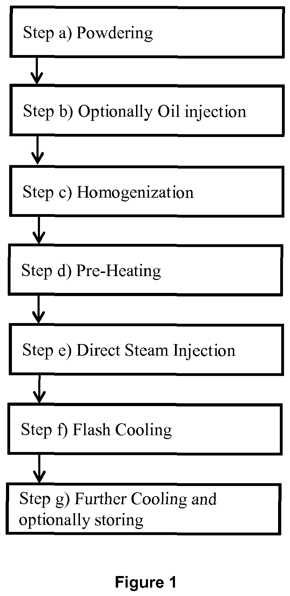

The preparation process of Mass1 is a continuous process involving a direct stream injection (DSI) step, and is represented on figure 1. This process, as well as the operating parameters, allow an efficient preparation, avoiding fouling the equipment during a significant running time period.

### Step a)

The almond past is pumped into the tank containing the osmosed water before addition of the powders using a classical dispersion system (YSTRAL Conti TDS).

### Step b)

The oil is injected on line using a volumetric pump.

### Step c)

A one step homogenization is performed with an APV Gaulin homogenizer at 50 bars (50 10⁵ Pa) at a temperature of 20°C.

### Step d)

A pre-heating step is performed to reach a temperature of 63°C with a standard plate-heat exchanger.

### Step e)

A heating step is performed with a Direct Steam Injection system at 145°C during 4s, at 1 bar (10⁵ Pa).

### Step f)

Flash cooling step is performed in a flash cooler to decrease temperature to 55°C.

### Step g)

A cooling step is performed with a standard plate-heat exchanger to reach a temperature of 25°C. The product is transferred and stored in an aseptic tank at a temperature of 10°C.

### Mass 2

Mass 2 has the composition shown on table 2 below.

**Table 2**

| **Ingredient** | **Wt % (as is)** |
|---|---|
| Skimmed Milk | 83.80% |
| Cristal sugar | 10.00% |
| Native Starch: Amioca Powder TF, Ingredion® | 1.50% |
| Modified Starch: National Frigex™ NSC, Ingredion® | 1.70% |
| Almond Past 95%, Fruisec® | 3.00% |
| Total | 100% |
| pH | 6.6 |

Mass 2 is prepared by the following procedure:
- The almond past is pumped into the skimmed milk then the other ingredients in powder form are added, using a powdering system (Ystral Conti TDS);
- A pre-heating step is performed to reach a temperature of 63°C, using standard plate heat exchanger;
- An homogenization is performed with an APV Gaulin homogenizer at 100 bars (10⁷ Pa) at 63°C;
- A pasteurization is performed at 95°C during 6 min;
- A sterilization step is performed at 131°C during 60s with plate heat exchanger;
- A first cooling step is performed to reach a temperature of 40°C and then a second cooling step is performed to reach 10°C, both being done with a standard plate heat exchanger.

### Final composition

The final composition is shown on table 3 below. It is obtained by mixing 88 parts by weight of Mass 1 and 12 parts by weight of Mass 2, within a time frame of less than 2h after preparation of Mass1.

**Table 3**

| **Ingredient** | **Wt parts (as is)** |
|---|---|
| Fish oil: Omegavi 1812, Polaris® | 0.58 |
| WPI¹⁾ Lacprodan® 9224, Arla® | 9.90 |
| Sodium Caseinate: EM7, DMV® | 1.065 |
| L-Leucine | 0.36 |
| Native Starch: Amioca Powder TF, Ingredion® | 0.745 |
| Modified Starch: National Frigex™ NSC, Ingredion® | 0.17 |
| Cristal sugar | 7.75 |
| Almond Past 95%, Fruisec® | 1.95 |
| Skimmed Milk | 8.38 |
| Osmosed Water | 54.10 |
| Total | 85 |
| pH | 6.7 |

### Evaluations

Mass 1 is a liquid that does not foul the processing equipments. The viscosity (at 30°C, at 1290 s⁻¹ after 10s) upon storing is about 80 mPa.s and remains stable during about 2h30min.

Mass 2 is a stable liquid, with a viscosity (at 30°C, at 1290 s⁻¹ after 10s) of about 80 mPa.s.

### Example 2: Rheology evolutions

In an example 2a, the final composition is filled in a cup. The rheology during a shelf life of up to 14 days at 10°C is evaluated by a TA.XT2 analysis. The results are presented on table 4 below.

In a comparative example 2b, Mass 1 is not mixed with Mass 2. The composition is filled in a cup. The rheology during a shelf life of up to 14 days at 10°C is evaluated by a TA.XT2 analysis. The results are presented on table 4 below.

**Table 4**

| | Example 2a (Mass 1+Mass 2) | Example 2b (Mass 1) Comparative | Mass 2 Comparative |
|---|---|---|---|
| Rheology evolution | The composition evolves from a liquid to viscous composition. | The composition evolves from a liquid to viscous composition. | Liquid with stable viscosity |
| Gel Strength after 7 day shelf life (g) | 2150 | 5000 | Not applicable |
| Gel Strength after 14 day shelf life (g) | 2900 | 8000 | Not applicable |
| Gel strength increase from 7 to 14 days shelf life | +34.9% | +60% | Not applicable |

This shows that, while Mass 1 and Mass 2 have the same initial viscosity, the addition of Mass 2 allows obtaining gels that have an increased rheology stability (lower evolution in time). The process with the addition of the aqueous preparation comprising a polysaccharide surprisingly allows the formation of a gel with an interesting and more stable texture.

## Claims

1. A process for making a viscous composition comprising at least 8.0% by weight of whey protein, comprising the following steps of:
Step 1) preparing a Mass 1 composition comprising at least 8.8% by weight of whey protein and heat-treating at a temperature of higher than 85°C, and
Step 2) adding at least one aqueous preparation comprising at least one polysaccharide, comprising a native starch,
Step 3) filling the composition in a packaging container,
wherein the ratio by weight between Mass 1 and the aqueous preparation is of at least 50/50, preferably between 60/40 to 90/10.

2. The process according to claim 1, wherein Mass 1 comprises a polysaccharide.

3. The process according to claim 2, wherein the polysaccharide of Mass 1 and the at least one polysaccharide of the aqueous preparation are identical.

4. The process according to any one of the preceding claims, wherein the at least one aqueous preparation comprises a Mass 2 composition comprising the at least one polysaccharide, and at least a Mass 3 fruit preparation.

5. The process according to claim 4, wherein Mass 3 comprises at least one polysaccharide, preferably identical to the at least one polysaccharide of Mass 2.

6. The process according to any one of the preceding claims, wherein the at least one polysaccharide is a native starch.

7. The process according to any one of the preceding claims, wherein the composition comprises from 0.1 to 5.0% by weight, preferably from 0.5 to 2.0% by weight, of the at least one polysaccharide.

8. The process according to any one of the preceding claims, wherein the composition has a pH of from 4.2 to 10.0, preferably of from 6.0 to 8.0.

9. The process according to any one of the preceding claims, wherein Mass 1 and optionally the at least one aqueous preparation comprise sugar.

10. The process according to any one of the preceding claims, wherein the composition is an aqueous composition comprising from 10.5% to 17.5% by weight of whey protein, and Mass 1 comprises at least 11.66% by weight of whey protein.

11. The process according to any one of the preceding claims, wherein the composition has a gel strength of from 1000 g to 8000 g, preferably from 1000 g to 5000 g, for example from 1000 g to 2800 g.

12. The process according to any one of the preceding claims, wherein Mass 1 has a viscosity of less than 500 mPa.s at 1290 s⁻¹ at 30°C, preferably less than 100 mPa.s at 1290 s⁻¹ at 30°C.

13. The process according to any one of the preceding claims, wherein the composition has a dry matter content of up to 60% by weight, preferably from 8% to 50% by weight.

14. The process according to any one of the preceding claims, wherein an intermediate storage time of Mass 1 of up to 6 hours, preferably up to 3 hours is allowed between step 1) and step 2).

15. The process according to any one of the preceding claims, wherein step 1) comprises the following steps:
Step a) Powdering,
Step b) Optionally Oil injection,
Step c) Homogenization,
Step d) Pre-Heating,
Step e) Direct Steam Injection (DSI),
Step f) Flash cooling,
Step g) Further cooling and optionally Storing.

16. The process according to any one of the preceding claims, comprising a step of storing the composition to allow a gel formation.

17. The process according to any one of the preceding claims, wherein the composition, in a packaging container, is stored at a chilled temperature or at an ambient temperature.

## Patentansprüche

1. Verfahren zur Herstellung einer viskosen Zusammensetzung, die mindestens 8,0 Gewichts-% Molkenprotein umfasst, umfassend die folgenden Schritte:
Schritt 1) Zubereiten einer Masse-1-Zusammensetzung, die mindestens 8,8 Gewichts-% Molkenprotein umfasst, und Wärmebehandeln bei einer Temperatur von mehr als 85 °C, und
Schritt 2) Zugeben von mindestens einer wässrigen Zubereitung, die mindestens ein Polysaccharid umfasst, das eine native Stärke umfasst,
Schritt 3) Füllen der Zusammensetzung in einen Verpackungsbehälter,
wobei das Gewichtsverhältnis zwischen Masse 1 und der wässrigen Zubereitung mindestens 50/50, vorzugsweise zwischen 60/40 und 90/10 beträgt.

2. Verfahren nach Anspruch 1, wobei Masse 1 ein Polysaccharid umfasst.

3. Verfahren nach Anspruch 2, wobei das Polysaccharid von Masse 1 und das mindestens eine Polysaccharid der wässrigen Zubereitung identisch sind.

4. Verfahren nach einem der vorstehenden Ansprüche, wobei die mindestens eine wässrige Zubereitung eine Masse-2-Zusammensetzung, die das mindestens eine Polysaccharid umfasst, und mindestens eine Masse-3-Fruchtzubereitung umfasst.

5. Verfahren nach Anspruch 4, wobei Masse 3 mindestens ein Polysaccharid, vorzugsweise mit dem mindestens einen Polysaccharid von Masse 2 identisch, umfasst.

6. Verfahren nach einem der vorstehenden Ansprüche, wobei das mindestens eine Polysaccharid eine native Stärke ist.

7. Verfahren nach einem der vorstehenden Ansprüche, wobei die Zusammensetzung 0,1 bis 5,0 Gewichts-%, vorzugsweise 0,5 bis 2,0 Gewichts-%, des mindestens einen Polysaccharids umfasst.

8. Verfahren nach einem der vorstehenden Ansprüche, wobei die Zusammensetzung einen pH-Wert von 4,2 bis 10,0, vorzugsweise von 6,0 bis 8,0 aufweist.

9. Verfahren nach einem der vorstehenden Ansprüche, wobei Masse 1 und gegebenenfalls die mindestens eine wässrige Zubereitung Zucker umfassen.

10. Verfahren nach einem der vorstehenden Ansprüche, wobei die Zusammensetzung eine wässrige Zusammensetzung ist, die 10,5 Gewichts-% bis 17,5 Gewichts-% Molkenprotein umfasst, und Masse 1 mindestens 11,66 Gewichts-% Molkenprotein umfasst.

11. Verfahren nach einem der vorstehenden Ansprüche, wobei die Zusammensetzung eine Gelstärke von 1000 g bis 8000 g, vorzugsweise von 1000 g bis 5000 g, zum Beispiel von 1000 g bis 2800 g aufweist.

12. Verfahren nach einem der vorstehenden Ansprüche, wobei Masse 1 eine Viskosität von weniger als 500 mPa.s bei 1290 s⁻¹ bei 30 °C, vorzugsweise weniger als 100 mPa.s bei 1290 s⁻¹ bei 30 °C aufweist.

13. Verfahren nach einem der vorstehenden Ansprüche, wobei die Zusammensetzung einen Trockensubstanzgehalt von bis zu 60 Gewichts-%, vorzugsweise von 8 Gewichts-% bis 50 Gewichts-% aufweist.

14. Verfahren nach einem der vorstehenden Ansprüche, wobei eine Zwischenlagerungszeit von Masse 1 von bis zu 6 Stunden, vorzugsweise bis zu 3 Stunden zwischen Schritt 1) und Schritt 2) ermöglicht wird.

15. Verfahren nach einem der vorstehenden Ansprüche, wobei Schritt 1) die folgenden Schritte umfasst:
Schritt a) Pulverisieren,
Schritt b) gegebenenfalls Ölinjektion,
Schritt c) Homogenisieren,
Schritt d) Vorerhitzen,
Schritt e) Direktdampfinjektion (DSI),
Schritt f) Blitzkühlung,
Schritt g) weiteres Kühlen und gegebenenfalls Lagern.

16. Verfahren nach einem der vorstehenden Ansprüche, das einen Schritt des Lagerns der Zusammensetzung umfasst, um eine Gelbildung zu ermöglichen.

17. Verfahren nach einem der vorstehenden Ansprüche, wobei die Zusammensetzung in einem Verpackungsbehälter bei einer gekühlten Temperatur oder bei einer Umgebungstemperatur gelagert wird.

## Revendications

1. Procédé de fabrication d'une composition visqueuse comprenant au moins 8,0 % en poids de protéine de lactosérum, comprenant les étapes suivantes de :
Étape 1) préparation d'une composition Masse 1 comprenant au moins 8,8 % en poids de protéine de lactosérum et traitement thermique à une température supérieure à 85 °C, et
Étape 2) ajout d'au moins une préparation aqueuse comprenant au moins un polysaccharide, comprenant un amidon natif,
Étape 3) chargement de la composition dans un récipient de conditionnement,
dans lequel le rapport en poids entre la Masse 1 et la préparation aqueuse est d'au moins 50/50, de préférence entre 60/40 et 90/10.

2. Procédé selon la revendication 1, dans lequel la Masse 1 comprend un polysaccharide.

3. Procédé selon la revendication 2, dans lequel le polysaccharide de la Masse 1 et l'au moins un polysaccharide de la préparation aqueuse sont identiques.

4. Procédé selon l'une quelconque des revendications précédentes, dans lequel l'au moins une préparation aqueuse comprend une composition Masse 2 comprenant l'au moins un polysaccharide, et au moins une préparation de fruits Masse 3.

5. Procédé selon la revendication 4, dans lequel la Masse 3 comprend au moins un polysaccharide, de préférence identique à l'au moins un polysaccharide de la Masse 2.

6. Procédé selon l'une quelconque des revendications précédentes, dans lequel l'au moins un polysaccharide est un amidon natif.

7. Procédé selon l'une quelconque des revendications précédentes, dans lequel la composition comprend de 0,1 à 5,0 % en poids, de préférence de 0,5 à 2,0 % en poids, de l'au moins un polysaccharide.

8. Procédé selon l'une quelconque des revendications précédentes, dans lequel la composition possède un pH de 4,2 à 10,0, de préférence de 6,0 à 8,0.

9. Procédé selon l'une quelconque des revendications précédentes, dans lequel la Masse 1 et facultativement l'au moins une préparation aqueuse comprennent du sucre.

10. Procédé selon l'une quelconque des revendications précédentes, dans lequel la composition est une composition aqueuse comprenant de 10,5 % à 17,5 % en poids de protéine de lactosérum, et la Masse 1 comprend au moins 11,66 % en poids de protéine de lactosérum.

11. Procédé selon l'une quelconque des revendications précédentes, dans lequel la composition possède une force de gel de 1000 g à 8000 g, de préférence de 1000 g à 5000 g, par exemple de 1000 g à 2800 g.

12. Procédé selon l'une quelconque des revendications précédentes, dans lequel la Masse 1 possède une viscosité de moins de 500 mPa.s à 1290 s⁻¹ à 30 °C, de préférence de moins de 100 mPa.s à 1290 s⁻¹ à 30 °C.

13. Procédé selon l'une quelconque des revendications précédentes, dans lequel la composition possède une teneur en matière sèche allant jusqu'à 60 % en poids, de préférence de 8 % à 50 % en poids.

14. Procédé selon l'une quelconque des revendications précédentes, dans lequel une période de stockage intermédiaire de la Masse 1 allant jusqu'à 6 heures, de préférence jusqu'à 3 heures, est autorisée entre l'étape 1) et l'étape 2).

15. Procédé selon l'une quelconque des revendications précédentes, dans lequel l'étape 1) comprend les étapes suivantes :
Étape a) Poudrage,
Étape b) Facultativement injection d'huile,
Étape c) Homogénéisation,
Étape d) Préchauffage,
Étape e) Injection de vapeur directe (DSI),
Étape f) Refroidissement éclair,
Étape g) Refroidissement supplémentaire et facultativement stockage.

16. Procédé selon l'une quelconque des revendications précédentes, comprenant une étape de stockage de la composition pour permettre une formation de gel.

17. Procédé selon l'une quelconque des revendications précédentes, dans lequel la composition, dans un récipient de conditionnement, est stockée à une température refroidie ou à une température ambiante.
